(19) **Europäisches Patentamt**
**European Patent Office**
**Office européen des brevets**

(11) **EP 4 770 049 A1**

(12) **EUROPEAN PATENT APPLICATION**
published in accordance with Art. 153(4) EPC

(43) Date of publication:
**01.07.2026 Bulletin 2026/27**

(21) Application number: **24880203.5**

(22) Date of filing: **18.10.2024**

(51) International Patent Classification (IPC):
*H04L 65/80* (2022.01)   *H04L 65/1069* (2022.01)
*H04L 47/36* (2022.01)

(52) Cooperative Patent Classification (CPC):
**H04L 47/36; H04L 65/1069; H04L 65/80**

(86) International application number:
**PCT/KR2024/015923**

(87) International publication number:
**WO 2025/084866 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.10.2023 KR 20230141467**

(71) Applicant: **Samsung Electronics Co., Ltd
Suwon-si, Gyeonggi-do 16677 (KR)**

(72) Inventor: **YANG, Hyunkoo
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND APPARATUS FOR TRANSMITTING AND RECEIVING PACKET IN WIRELESS COMMUNICATION SYSTEM**

(57)   A method of providing a communication service includes providing a PDU set-based QoS-related policy request and PDU set-related information for a communication service to a PCF, generating a media transport session for a plurality of entities related to the communication service, based on the QoS-related policy request and the PDU set-related information, and processing data transmitted through the media transport session, according to a PDU set-based QoS policy, wherein the PDU set-related information includes a size in units of bytes of a PDU set and setting information for calculating the size in units of bytes.

FIG. 6

**Description**

**Technical Field**

The present disclosure relates to a wireless communication system, and more particularly, to a method and apparatus for providing a service quality management function based on media characteristics in a wireless network such as 5G.

**Background Art**

The 5th-generation (5G) mobile communication technology defines a wide frequency band to allow high transmission speed and new service and may also be implemented in an ultra-high frequency ("above 6 GHz") band referred to as millimeter wave (mmWave), such as 28 GHz and 39 GHz, as well as a below 6 GHz frequency ("sub 6 GHz") band such as 3.5 GHz. Also, in the case of the 6th-generation (6G) mobile communication technology referred to as the system beyond 5G communication (beyond 5G system), implementation in the terahertz (THz) band (e.g., 95 GHz to 3 THz band) is being considered to achieve a transmission speed that is 50 times the transmission speed of the 5G mobile communication technology and an ultra-low delay time that is one tenth of the delay time of the 5G mobile communication technology.

In the early stage of the 5G mobile communication technology, in order to support services and satisfy performance requirements for enhanced mobile broadband (eMBB), ultra-reliable low-latency communications (URLLC), and massive machine-type communications (mMTC), standardization has been performed on beamforming and massive MIMO for mitigating the path loss of radio waves in the ultra-high frequency band and increasing the propagation distance of radio waves, support of various numerologies (operation of multiple subcarrier intervals and the like) and dynamic operation of slot formats for efficient utilization of ultra-high frequency resources, initial access technology for supporting multi-beam transmission and broadband, definition and operation of bandwidth parts (BWPs), new channel coding methods such as low-density parity check (LDPC) codes for large-capacity data transmission and polar codes for reliable transmission of control information, L2 preprocessing, network slicing for providing dedicated networks specialized for particular services, and the like.

Currently, by considering services that the 5G mobile communication technology was intended to support, discussion for initial 5G mobile communication technology improvement and enhancement has been performed, and physical layer standardization for technologies such as vehicle-to-everything (V2X) for assisting the driving determination of autonomous vehicles and increasing the convenience of users based on the position and state information transmitted by the vehicles, new radio unlicensed (NR-U) for the purpose of system operations meeting various regulation requirements in unlicensed bands, NR UE low power consumption technology (UE power saving), non-terrestrial network (NTN) that is UE-satellite direct communication for securing a coverage in an area where communication with a terrestrial network is impossible, and positioning has been performed.

In addition, standardization of wireless interface architectures/protocols for technologies such as Industrial Internet of Things (IIoT) for supporting new services through linkage and integration with other industries, Integrated Access and Backhaul (IAB) for providing nodes for expanding network service areas by integrating a wireless backhaul link and an access link, Mobility Enhancement including Conditional Handover and Dual Active Protocol Stack (DAPS) Handover, and 2-step RACH for NR for simplifying a random access procedure has also been performed, and standardization of system architectures/services for 5G baseline architectures (e.g., Service-based Architecture and Service-based Interface) for grafting Network Function Virtualization (NFV) and Software-Defined Networking (SDN) technology, Mobile Edge Computing (MEC) for providing services based on the position of UEs, and the like has also been performed.

When such 5G mobile communication systems are commercialized, connected devices in the trend of explosive increase will be connected to the communication network and accordingly it is expected to require enhanced functions and performance of the 5G mobile communication system and integrated operation of connected devices. For this purpose, new research will be conducted on Extended Reality (XR) for efficiently supporting Augmented Reality (AR), Virtual Reality (VR), Mixed Reality (MR), and the like, 5G performance improvement and complexity reduction utilizing Artificial Intelligence (AI) and Machine Learning (ML), AI service support, metaverse service support, drone communication, and the like.

Also, the development of the 5G mobile communication systems may serve as a basis for the development of not only multi-antenna transmission technologies such as New Waveform, Full Dimensional MIMO (FD-MIMO), Array Antenna, and Large Scale Antenna for ensuring the coverage in the terahertz band of the 6G mobile communication technology, high-dimensional spatial multiplexing technologies using meta material-based lenses and antennas and Orbital Angular Momentum (OAM) to improve the coverage of terahertz band signals, and Reconfigurable Intelligent Surface (RIS) technologies, but also full duplex technologies for improving the frequency efficiency and system network of the 6G mobile communication technology, AI-based communication technologies utilizing satellites and AI from the design stage and embedding an end-to-end AI support function to realize system optimization, next-generation distributed computing technologies for realizing services with complexity beyond the limit of the UE operation capability by utilizing ultrahigh-performance communication and computing resources, and the like.

Because various services may be provided due to the foregoing and the development of wireless communication systems, a scheme for effectively providing these services is required, and particularly, a scheme for efficiently performing real-time media transmission for voice and video call or the like is required.

**Disclosure of Invention**

**Technical Problem**

The present disclosure provides an apparatus and method capable of effectively providing a service quality management function by considering media characteristics in a wireless communication system.

**Solution to Problem**

According to the present disclosure, a method performed by a real-time communication application server (RTC AS) in a wireless communication system is provided. The method may include receiving a request for media session establishment from a user equipment (UE). The method may include performing the media session establishment based on a PDU set-based QoS-related policy and PDU set-related information. The method may include transmitting a media packet based on the PDU set-related information. The PDU set-related information may include a size of a PDU set.

According to the present disclosure, a method performed by a user equipment (UE) in a wireless communication system is provided. The method may include transmitting a request for media session establishment to an RTC AS. The method may include receiving a media packet based on a PDU set-based QoS-related policy for the media session establishment and PDU set-related information. The PDU set-related information may include a size of a PDU set.

According to the present disclosure, an RTC AS performing communication in a wireless communication system may be provided, and the RTC AS may include a transceiver and at least one processor coupled to the transceiver. The at least one processor may be configured to receive a request for media session establishment from a UE. The at least one processor may be configured to perform the media session establishment based on a PDU set-based QoS-related policy and PDU set-related information. The at least one processor may be configured to transmit a media packet based on the PDU set-related information. The PDU set-related information may include a size of a PDU set.

The apparatus and method according to the present disclosure may effectively provide a service quality management function by considering media characteristics in a mobile communication system.

Effects that may be obtained from the present disclosure are not limited to the effects mentioned in various embodiments, and other effects not mentioned herein may be clearly understood from the following description by those of ordinary skill in the art.

**Brief Description of Drawings**

FIG. 1 is a conceptual diagram illustrating a 5G system structure for a real-time communication service in a wireless communication system according to an embodiment of the present disclosure.
FIG. 2 is a conceptual diagram illustrating a packetization process of an image data unit in a wireless communication system according to an embodiment of the present disclosure.
FIG. 3 is a conceptual diagram illustrating an example of a packet header in a wireless communication system according to an embodiment of the present disclosure.
FIG. 4 is a diagram illustrating an example of an RTP extension header according to an embodiment of the present disclosure.
FIG. 5 is a conceptual diagram illustrating an example of an NAT64 operation in a wireless communication system according to an embodiment of the present disclosure.
FIG. 6 is a conceptual diagram illustrating a 5G system configuration information flow for a real-time communication service in a wireless communication system according to an embodiment of the present disclosure.
FIG. 7 is a conceptual diagram illustrating an example of a media transmission path in a wireless communication system according to an embodiment of the present disclosure.
FIG. 8 is a conceptual diagram illustrating an example of a PDU Set Marking information signaling path in a wireless communication system according to an embodiment of the present disclosure.

## Mode for the Invention

The operation principles of the present disclosure will be described below in detail with reference to the accompanying drawings. In the following description of the present disclosure, detailed descriptions of well-known functions or configurations will be omitted because they would unnecessarily obscure the subject matters of the present disclosure. Also, terms described below may be terms defined considering functions in the present disclosure and may vary according to users' or operators' intentions or practices. Therefore, definitions thereof should be made based on the contents throughout the present disclosure.

For the same reason, some elements in the accompanying drawings may be exaggerated, omitted, or schematically illustrated. Also, the size of each element may not completely reflect the actual size thereof. In each drawing, like or corresponding components will be assigned like reference numerals.

Advantages and features of the present disclosure and methods of achieving the same will be apparent from the embodiments of the present disclosure described below in detail with reference to the accompanying drawings. The present disclosure may, however, be embodied in many different forms and should not be construed as being limited to the embodiments of the present disclosure described below; rather, these embodiments of the present disclosure are provided to complete the present disclosure and fully convey the scope of the disclosure to those of ordinary skill in the art and the present disclosure will be defined only by the scope of the claims. Throughout the specification, like reference numerals may denote like elements.

In this case, it will be understood that each block of the processing flowcharts and combinations of the flowcharts may be performed by computer program instructions. Because these computer program instructions may be mounted on a processor of a general-purpose computer, special-purpose computer, or other programmable data processing equipment, the instructions executed through a processor of a computer or other programmable data processing equipment may generate a means of performing the functions described in the flowchart block(s). Because the computer program instructions may also be stored in a computer-usable or computer-readable memory that may be directed to a computer or other programmable data processing apparatuses to implement a function in a particular manner, the instructions stored in the computer-usable or computer-readable memory may also produce a manufacturing item containing an instruction means for performing the function described in one or more flowchart blocks. Because the computer program instructions may also be mounted on a computer or other programmable data processing equipment, the instructions performing a series of operations on the computer or other programmable data processing equipment to generate a computer-implemented process to perform the computer or other programmable data processing equipment may also provide operations for executing the functions described in the flowchart block(s).

Also, each block may represent a module, a segment, or a portion of code that includes one or more executable instructions for performing one or more particular logical functions. Also, it should be noted that the functions described in the blocks may occur out of order in some alternative implementation examples. For example, two blocks consecutively illustrated may be performed substantially simultaneously or may sometimes be performed in reverse order depending on the corresponding functions.

In this case, the term "~ unit" used in the present embodiment of the present disclosure may refer to a software component or a hardware component such as a field programmable gate array (FPGA) or an application specific integrated circuit (ASIC) and the "~ unit" may perform certain functions. However, the "~ unit" is not limited to software or hardware. The "~ unit" may be configured to be in an addressable storage medium and may be configured to operate one or more processors. Thus, for example, the "~ unit" may include components such as software components, object-oriented software components, class components, and task components and may include processes, functions, attributes, procedures, subroutines, segments of program code, drivers, firmware, microcode, circuits, data, databases, data structures, tables, arrays, and variables. A function provided in the components and "units" may be combined into the smaller number of components and "units", or may be further divided into additional components and "units". Also, the components and '~ units' may be implemented to play one or more CPUs in a device or a secure multimedia card. Also, in embodiments, the "unit" may include one or more processors.

In the following description of the present disclosure, detailed descriptions of well-known functions or configurations will be omitted because they would unnecessarily obscure the subject matters of the present disclosure. Hereinafter, embodiments of the present disclosure will be described with reference to the accompanying drawings.

In the following description, terms for identifying access nodes, terms referring to network entities (NFs), terms referring to messages, terms referring to interfaces between NFs, terms referring to various identification information, and the like are used for convenience of description. Thus, the present disclosure is not limited to the terms described below and any other terms referring to objects having equivalent technical meanings may be used.

The terms used herein are just for the purpose of describing particular embodiments and are not intended to limit the scope of the present disclosure. As used herein, the singular forms "a," "an," and "the" may include the plural forms as well, unless the context clearly indicates otherwise. Unless otherwise defined, all terms (including technical or scientific terms) used herein may have the same meanings as commonly understood by those of ordinary skill in the art of the present disclosure. The terms defined in commonly used dictionaries may be interpreted as having the same meanings as the contextual meanings of the related art and will not be interpreted in an idealized or overly formal sense unless expressly so defined herein. In some cases, even the terms defined herein may not be interpreted to exclude the embodiments of the present disclosure.

In various embodiments of the present disclosure described below, a hardware-based approach will be described as an example. However, because the various embodiments of the present disclosure include technologies that use both hardware and software, the various embodiments of the present disclosure do not exclude a software-based approach.

For convenience of description, the present disclosure may use terms and names defined in the LTE and NR standards that are the most recent standards defined by the 3rd Generation Partnership Project (3GPP) among the existing communication standards. However, the present disclosure is not limited to the above terms and names and may also be similarly applied to systems according to other standards. Particularly, the present disclosure may be applied to 3GPP NR (5th generation (5G) mobile communication standard). Also, embodiments of the present disclosure may be applied to other communication systems with similar technical backgrounds or channel types. Also, embodiments of the present disclosure may also be applied to other communication systems through some modifications without materially departing from the scope of the present disclosure by the judgment of those of ordinary skill in the art.

The present disclosure relates to a mobile communication system, and when packets constituting a media stream in a mobile communication system supporting a real-time communication service are processed according to the same policy, that is, when the difference in the influence of media data included in each packet on the service quality is not considered, it may be impossible to provide the service quality optimized for given network resources. Thus, a technology for improving the media quality and saving the network resources by using the difference in the influence of the media data included in each packet on the service quality in a wireless communication system is described.

The terms used in the following description, such as terms referring to signals, terms referring to channels, terms referring to control information, terms referring to network entities, and terms referring to components of apparatuses, are used for convenience of description. Thus, the present disclosure is not limited to the terms described below and any other terms having equivalent technical meanings may be used.

Also, although the present disclosure describes various embodiments by using terms used in some communication standards (e.g., 3GPP), these are merely examples for illustrative purposes. Various embodiments of the present disclosure may be easily modified and applied to other communication systems.

As for a real-time communication service, a user may negotiate service configuration information including media information with a real-time media server or another user by using an application provided by a real-time communication application provider and may establish a real-time communication media session based on this to exchange media data such as voice and video with each other in real time.

In order to provide a real-time communication service, the 5G system (5GS) may include a new generation-radio access network (NG-RAN) and a user plane function (UPF) in a communication path of the real-time communication media session.

The real-time communication service may include media with various transmission characteristics such as voice, video, and text. In order to ensure the QoS of the real-time communication service, the network may consider information for identifying the packet including the media data and transmission characteristics for each media. A general communication system may define a packet flow, which is a set of packets to which the same QoS is provided, and set an operation of a network entity located in the communication path of the media session. Information for setting the operation of the network entity may include information for identifying the packet belonging to the packet flow and a QoS policy to be applied to the packet belonging to the packet flow. Information for identifying the packet flow may include a transmission/reception IP address, a transmission/reception port number (e.g., TCP or UDP port number), a transport protocol identifier, and the like. For example, in a real-time communication service including voice and video, when seamless transmission of voice information is important, the voice information may be transmitted in a separate packet flow that provides a higher QoS.

However, a data unit constituting media data may not be preserved and may be divided into a plurality of packets in a packetization process for network transmission, and when even a portion thereof is damaged or lost depending on the characteristics of a media codec, it may be impossible to restore a media unit at the receiving end. Thus, when the network independently processes each of the packets belonging to the media unit, a packet that the receiver may not use may be transmitted through the network, thus wasting the network resources. Also, data units constituting media may have different priorities and interrelations depending on the characteristics of the media. For example, in video compression, an intra-frame may affect the restoration of other frames referring to the intra-frame. Thus, when packets including the intra-frame are processed with a higher priority than packets including the frame referring to the intra-frame, the network resources may be efficiently used. In order to solve the above problems, the present disclosure may provide a method of processing a media packet in units of data units constituting the media and monitoring the results thereof.

Apparatuses and methods according to various embodiments of the present disclosure described below may allow real-time communication service providers to provide the QoS considering media characteristics when providing a real-time service in the 5G systems (5GS).

Effects that may be obtained from the present disclosure are not limited to the effects mentioned above, and other effects not mentioned herein may be clearly understood from the following description by those of ordinary skill in the art.

Also, for convenience of description, the following description may use terms and names defined in the 5G system standards. However, the present disclosure is not limited to the above terms and names and may also be similarly applied to systems conforming to other standards.

In the present disclosure, a protocol data unit (PDU) may refer to a unit equal to the sum of a header and data in each layer of communication.

In the present disclosure, a user plane function (UPF) may refer to a network function that processes a user plane.

In the present disclosure, an access and mobility management function (AMF) may function as a path for a UE to access the network.

In the present disclosure, a session management function (SMF) may provide a connection between a UE and an external data network.

In the present disclosure, a policy control function (PCF) may manage an integration policy for the overall network operation and transmit the same to other entities.

In the present disclosure, a network exposure function (NEF) may exchange and control information with an external application.

In the present disclosure, an NF repository function (NRF) may monitor the dynamically changing service state of the network and manage interoperation information.

In the present disclosure, an authentication server function (AUSF) may manage whether to allow access to the network, an application, the system, or the like.

In the present disclosure, a unified data management (UDM) may provide essential services to various network functions based on requests.

In the present disclosure, a real-time communication application (RTC A) may refer to an application that operates in a time frame sensed as current by the user.

In the present disclosure, a user datagram protocol (UDP) may refer to a protocol that processes data in units of datagrams.

In the present disclosure, an Internet protocol (IP) may refer to an information-oriented protocol used by a transmitting host and a receiving host to exchange information with each other in a packet-switched network.

In the present disclosure, a real-time transport protocol (RTP) may refer to a protocol for transmitting audio and video on an IP network.

In the present disclosure, a uniform resource identifier (URI) may refer to a unique address representing a resource on the Internet.

In the present disclosure, a GPRS tunneling protocol (GTP) may refer to a protocol used for GPRS transmission in the network.

In the present disclosure, a base station may be an entity that performs resource allocation to a UE and may be at least one of gNode B, eNode B, Node B (or xNode B (where "x" is an alphabet including "g" and "e")), a base station (BS), a radio access unit, a base station controller, a satellite, an airborne vehicle, or a node on the network but is not limited thereto. The base station in the present disclosure may refer to the base station itself, a cell, or an RU depending on the interpretation, and a target exchanging messages with a UE may be a DU or a CU depending on the structure.

Also, in the present disclosure, a user equipment (UE) may include a mobile station (MS), a cellular phone, a smartphone, a computer, a vehicle, a satellite, or a multimedia system capable of performing a communication function.

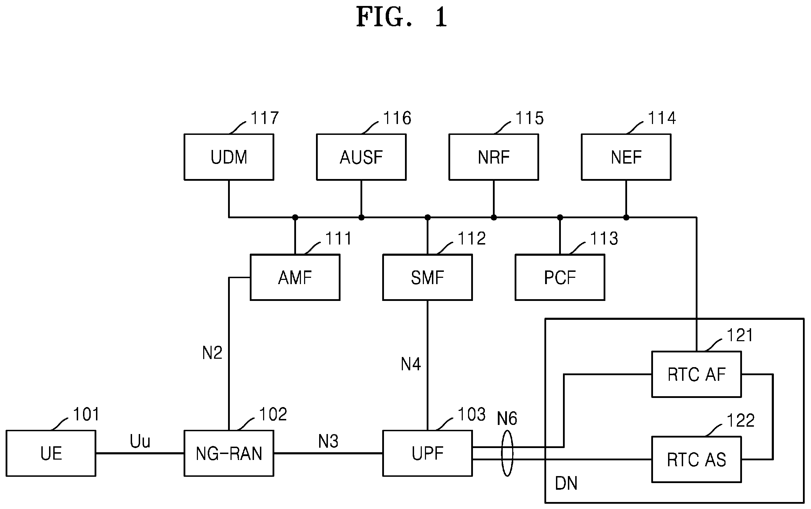

FIG. 1 is a conceptual diagram illustrating a 5G system (5GS) structure for a real-time communication service in a wireless communication system according to an embodiment of the present disclosure.

Referring to FIG. 1, the 5GS may include a user equipment (UE) 101, an NG-RAN 102 including a base station, a user plane function (UPF) apparatus 103, an access and mobility management function (AMF) apparatus 111, a session management function (SMF) apparatus 112, a policy control function (PCF) apparatus 113, a network exposure function (NEF) apparatus 114, an NF repository function (NRF) apparatus 115, an authentication server function (AUSF) apparatus 116, a unified data management (UDM) apparatus 117, a real-time communication application function (RTC AF) apparatus 121, and a real-time communication application server (RTC AS) apparatus 122. However, the 5GS is not limited thereto and may include fewer or more components than those illustrated in FIG. 1. Also, each apparatus may be referred to as a network entity, a network function, or a network function apparatus.

Referring to FIG. 1, each of the network functions (NFs) of the 5GS will be described as the "network entity" or "network function" itself. However, those of ordinary skill in the art may understand that the NF and/or the NF apparatus may be implemented in one or more particular servers, or two or more NFs performing the same operation may be implemented in one server.

Also, according to the present disclosure, one NF or two or more NFs may be implemented as a network slice in some cases. The network slice may be generated based on a particular purpose. For example, the network slice may be set for a subscriber group to provide the same type of service, such as a maximum transmission rate, data usage, or a guaranteed minimum transmission rate to a particular subscriber group. In addition, the network slice may be implemented for various purposes. The network slice may be obvious to those of ordinary skill in the art and thus redundant descriptions thereof will be omitted for conciseness.

Referring to FIG. 1, FIG. 1 illustrates interfaces between the respective nodes. A Uu interface may be used between the UE 101 and the NG-RAN 102, an N2 interface may be used between the NG-RAN 102 and the AMF 111, an N3 interface may be used between the NG-RAN 102 and the UPF 103, an N4 interface may be used between the SMF 112 and the UPF 103, and an N6 interface may be used between the UPF 103 and the 5G RTC AF 121 and the 5G RTC AS 122 located in a data network (DN). Because the above interfaces are defined in the 3GPP standards, redundant descriptions thereof will be omitted for conciseness. The interfaces between the RTC AF 121 and the RTC AS 122 and the UE will be described in a media architecture described below.

As described above, the data unit constituting the media data may be divided into a plurality of packets instead of being preserved in a packetization process for network transmission.

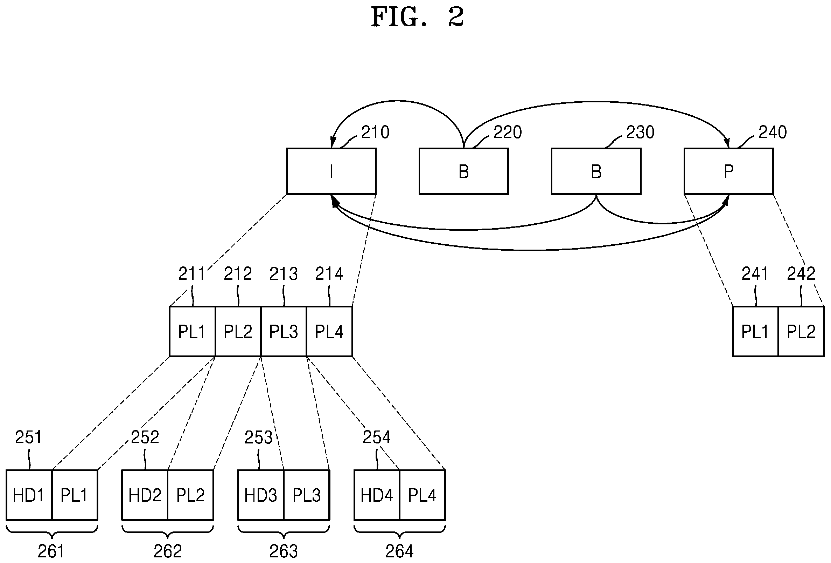

FIG. 2 is a conceptual diagram illustrating a packetization process of an image data unit in a wireless communication system according to an embodiment of the present disclosure. General image data may include a group of pictures (GOP) including pictures such as an intra-coded picture (I picture), a predictive-coded picture (P picture), and a bidirectional-coded picture (B picture), and the picture group may include at least one I picture.

Referring to FIG. 2, one picture group may include one I frame 210, two B frames 220 and 230, and one P frame 240, and the I frame 210 may be divided into four payloads, PL1 211, PL2 212, PL3 213, and PL4 214 and transmitted in four packets 261, 262, 263, and 264 including the respective payloads. The four packets 261, 262, 263, and 264 may respectively include headers HD1 251, HD2 252, HD3 253, and HD4 254 corresponding to the respective payloads PL1 211, PL2 212, PL3 213, and PL4 214. Hereinafter, a set of payloads divided from one media data unit may be referred to as a PDU set. Referring to FIG. 2, four payloads PL1 211, PL2 212, PL3 213, and PL4 214 constituting the I frame 210 may constitute a PDU set, and two payloads PL1 241 and PL2 242 constituting the P frame 240 may constitute another PDU set.

The packet may include a header and a payload, the header may include information necessary for the network to process the packet and transmit the same to the destination, and the payload may include information necessary for the receiving end to process media data and may include a separate payload header according to the media data processing method. The network may use the packet header and data included in the payload to identify the packet.

When the network identifies packets including the PDU belonging to the same PDU set, packet processing may be performed based on the PDU set. For example, a packet loss may occur when a traffic amount exceeds the network's processing capacity. In this case, service quality degradation may be minimized by minimizing the number of lost PDU sets relative to the number of lost packets through PDU set-based packet processing. Network apparatuses supporting the PDU set-based packet processing may be required to have a function of identifying packets belonging to the same PDU set and a function of identifying a processing method to be applied to packets belonging to the PDU set.

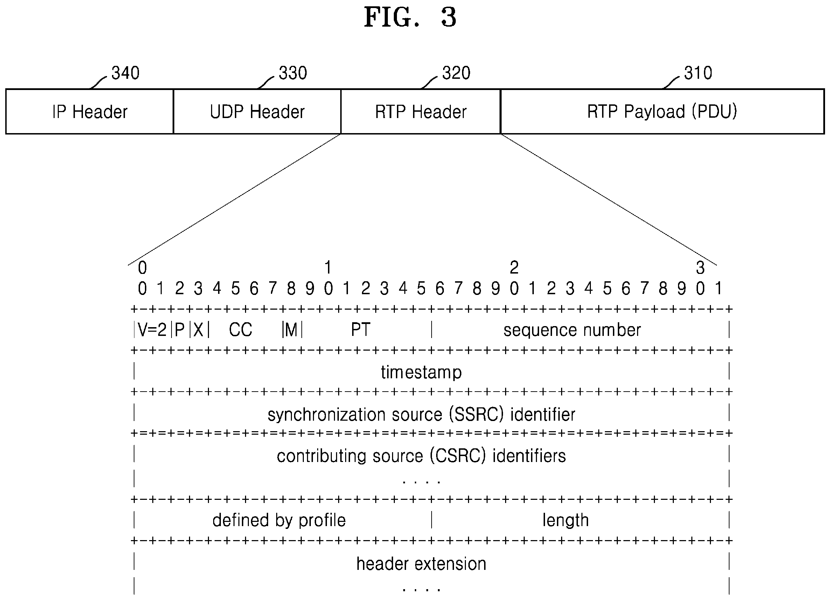

FIG. 3 is a conceptual diagram illustrating an example of a packet header in a wireless communication system according to an embodiment of the present disclosure. Referring to FIG. 3, an RTP header 320, a UDP header 330, and an IP header 340 may be added to transmit a PDU 310. The IP header 340 may be an IPv4 header or an IPv6 header based on the version of the Internet protocol (IP). The RTP header 320 may include an RTP extension header. Referring to FIG. 3, the first 12 octets or 12 bytes of the RTP header 320 may be included in all RTP packets, and a list of CSRCs may be added by a mixer. The respective fields of the RTP header 320 may have the following meanings.

- version (V): A 2-bit field indicating the version of the RTP. It may have a value of 2 conforming to IETF RFC 3550.
- padding (P): A 1-bit field having a value of 1 when the RTP packet includes a padding octet.
- extension (X): A 1-bit field having a value of 1 when the RTP packet includes an extension header.
- CSRC count (CC): A 4-bit field indicating the number of CSRC identifiers located after the 12-octet fixed header.
- marker (M): A 1-bit field the usage of which is determined by the RTP profile. For example, when a video frame is transmitted in a plurality of RTP packets, only the M field value of the last RTP packet among the RTP packets may be set to 1.
- payload type (PT): A 7-bit field for identifying the RTP payload format. This field value may be determined by using a static mapping determined by the RTP profile or a dynamic mapping determined by an out-of-band method using the session description protocol (SDP).
- sequence number: A 16-bit field that increases by 1 whenever each RTP packet is transmitted. It may be used for loss detection and packet order restoration in the receiver.
- Timestamp: A 32-bit field that may indicate the acquisition time or play time of a data sample included in the RTP packet.
- SSRC: A 32-bit field indicating an identifier of a synchronization source.
- CSRS: A 32-bit field indicating an identifier of a contribution source.

A real-time media service according to an embodiment of the present disclosure may include one or more media transport sessions, and information about the media transport session may include a 5-tuple (source IP address, destination IP address, source port number, destination port number, and transport protocol). Thus, like packets illustrated in FIG. 3, packets using the RTP/UDP/IP protocol and having the same source/destination IP address values of the IP header 340 and the same source/destination port number values of the UDP header 330 may be considered as packets belonging to one media transport session.

Information for identifying a packet belonging to the PDU set and information for determining a processing method to be applied to the packet belonging to the PDU set may be transmitted to a network apparatus through a packet header and a PDU. The media transport session according to an embodiment of the present disclosure may transmit the information by using a packet header and a payload header. The format of a particular header and payload used to transmit the above information and information included in the header and payload may vary depending on the type of a protocol used in the media transport session and the profile operating the protocol. Hereinafter, the method used to transmit the PDU set-related information in the media transport session may be referred to as a PDU Set Marking method. The PDU Set Marking method according to an embodiment of the present disclosure may include an RTP extension header. Also, the PDU Set Marking method may be included in network configuration information that supports PDU set-based packet processing.

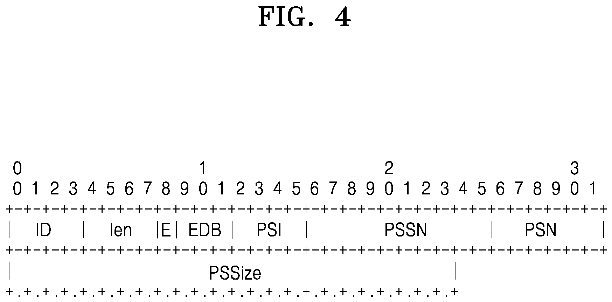

The RTP extension header may be specified by a uniform resource identifier (URI). FIG. 4 is a diagram illustrating an example of an RTP extension header according to an embodiment of the present disclosure. For example, the RTP extension header of FIG. 4 may be an extension header for PDU Set Marking and its URI may be "urn:3gpp:pdu-set-marking:rel-18". Referring to FIG. 4, the format and usage of each field of the extension header may be as follows.

- ID (4 bits): A local identifier of the RTP extension header
- len (4 bits): A value obtained by subtracting 1 from the length in units of bytes of the RTP extension header following this field. For example, a len field value of 0 may indicate the presence of 1-byte data.
- End PDU of the PDU set [E] (1 bit): A flag that has a value of 1 only when it is the last PDU in the PDU set and a value of 0 otherwise.
- End of Data Burst [EDB] (3 bits): A 3-bit field indicating the end of a data burst.
- PDU Set Importance [PSI] (4 bits): A field indicating the relative importance of an associated PDU set. The smaller value thereof may indicate the higher importance.
- PDU Set Sequence Number [PSSN] (10 bits): A field indicating the sequence number of the associated PDU set.
- PDU Sequence Number within a PDU Set [PSN] (6 bits): A field indicating the sequence number of an associated PDU within the PDU set.
- PDU Set Size [PSSize] (24 bits): A field indicating the length in units of bytes of the associated PDU set. This field may be optional and its presence/absence may be determined in the SDP negotiation process.

The value of the ID field and the presence/absence of the PSSize field may be determined in the SDP negotiation process. For example, the m-line (media description) of the negotiated SDP may include the following extmap attribute. a = extmap; 1 "urn:3gpp:pdu-set-marking:rel-18" pdu-set-size

Thus, an RTP stream included in the m-line including the extmap attribute may include an RTP extension header identified as "urn:3gpp:pdu-set-marking:rel-18", and in this case, the ID field value of the RTP extension header may be set to "1" and may indicate the presence of the PSSize field.

The size in units of bytes of the PDU set transmitted in the PSSize field may include the size of the packet header. Referring to FIG. 2, the I frame 210 may be divided into four payloads, PL1 211, PL2 212, PL3 213, and PL4 214 and transmitted in four packets 261, 262, 263, and 264 including the respective payloads. In this case, the value of the PSSize field may be calculated as the sum of the lengths of the four packets 261, 262, 263, and 264, which may include all of the lengths of the respective payloads PL1 211, PL2 212, PL3 213, and PL4 214 and the headers HD1 251, HD2 252, HD3 253, and HD4 254 corresponding thereto.

In the communication system according to an embodiment of the present disclosure, the extension header for PDU Set Marking may further include a field indicating a PSSize calculation method. For example, the RTP extension header of FIG. 4 may further include at least one of the following fields.

- PDU Set Size Method [PSSM] (1 bit): A 1-bit field indicating whether the PSSI field value is calculated considering only the PDU set payload size or considering the entire packet size. For example, a value of 0 may indicate that the PSSI field value is calculated as the sum of the lengths of the packets included in the PDU set, and a value of 0 may indicate that the PSSI field value is calculated as the sum of the lengths of the payloads included in the PDU set.
- IP version [IPV] (1 bit): A 1-bit field indicating whether the IP version of the packet received by an RTP receiver has been considered when the PSSI field value represents the sum of the lengths of the packets included in the PDU set. For example, a value of 0 may indicate that the PSSI field value has been calculated considering the IP version of the packet received by the RTP receiver, and a value of 1 may indicate that the PSSI field value has been calculated considering the IP version of the packet transmitted by an RTP transmitter. As another example, the IPV field may indicate the IP version considered in calculating the PSSI field value. In this case, a value of 0 may indicate that the PSSI field value has been calculated considering the IPv4 packet header length, and a value of 1 may indicate that the PSSI field value has been calculated considering the IPv6 packet header length.

- IP options [IPO] (1 bit): PSSI field: A 1-bit field indicating whether the length of the optional field of the IP packet has been considered when the PSSI field value represents the sum of the lengths of the packets included in the PDU set. For example, a value of 0 may indicate that the length of the optional field of the IP packet has been considered, and a value of 0 may indicate that the length of the optional field of the IP packet has not been considered.

The presence/absence of the PSSM, IPV, and IPO fields and their default values in the case of absence may be determined in the negotiation process. For example, the extmap attribute included in the m-line of the negotiated SDP may further include a flag indicating the presence/absence of each parameter and a parameter indicating a default value in the case of presence.

PSSOptions = [PSSOptParam*(":"PSSOptParam)]

PSSOptParam = (PSSMFlag [SP PSSMDefault])/(IPVFlag [SP IPVDefault])/(IPOFlag [SP IPODefault])/token

```
PSSMFlag = "0"/"1"
PSSMDefault = "0"/"1"
IPVFlag = "0"/"1"
IPVDefault = "0"/"1"
IPOFlag = "0"/"1"
IPODefault = "0"/"1"
```

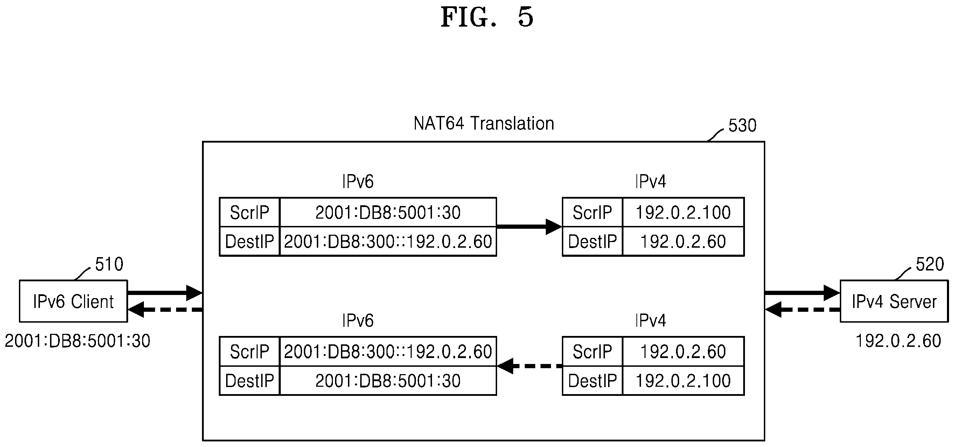

FIG. 5 is a conceptual diagram illustrating an example of an NAT64 operation in a wireless communication system according to an embodiment of the present disclosure. The NAT may be a network address translation (NAT) apparatus that rewrites the port number of the socket address and the source and destination IP addresses written in an IP packet and transmits/receives network traffic through a router, and may support IP version conversion. For example, the NAT64 may convert an IPv6 packet into an IPv4 packet to allow an IPv6 client 510 to communicate with an IPv4 server 520.

Referring to FIG. 5, the IPv6 client 510 with an IPv6 address of 2001:DB8:5001:30 and the IPv4 server 520 with an IPv4 address of 192.0.2.60 may exchange packets with each other by using an NAT64 530. In this case, the IPv6 client 510 should obtain an IPv6 destination address for packet transmission to the IPv4 server 520, and a method of allocating an IPv6 address to the IPv4 server 520 may vary depending on the settings of the network including the NAT64. For example, a 32-bit IPv4 address may be converted into a 128-bit IPv6 address by using a 96-bit prefix. The IPv6 client 510 may obtain an IPv6 address including the 96-bit prefix by using a domain name system (DNS64) or the like. Referring to FIG. 5, the source IP address of the IPv6 packet transmitted by the IPv6 client 510 to the IPv4 server 520 may be 2001:DB8:5001:30, and the destination IP address may be set to 2001:DB8:300::192.0.2.60. The IPv6 packet arriving at the NAT64 530 may be converted into an IPv4 packet, and in this case, the source IP address of the IPv4 packet may be set to 192.0.2.100 and the destination IP address may be set to 192.0.2.60. The mapping between the IPv6 packet source IP address and the IPv4 packet source IP address may conform to the settings of the NAT64 530. The IPv4 packet destination IP address value may be obtained by removing a 96-bit prefix 2001:DB8:300:: from the IPv6 packet destination IP address. The IPv4 server 520 that has received the IPv4 packet may transmit the IPv4 packet to the IPv6 client 510 in response thereto. In this case, the source IP address of the IPv4 packet may be set to the IPv4 address of the IPv4 server 520, and the destination IP address may be the source IP address of the received IPv4 packet, for example, the IPv4 address allocated by the NAT64 530 to the IPv6 client 510. The NAT64 530 that has received the IPv4 packet may convert the source IP address and the destination IP address of the received IPv4 packet respectively into 2001:DB8:300::192.0.2.60 and 2001:DB8:5001:30 and transmit the same to the IPv6 client 510. In this case, the source IP address of the IPv6 packet may be generated by adding a 96-bit prefix 2001:DB8:300:: to the IPv4 server 520 that has transmitted the IPv4 packet, and the destination IP address may conform to the mapping rule generated when the NAT64 530 allocates an IPv4 address to the IPv6 client 510.

Although the above embodiment describes a process in which the IPv6 client 510 transmits a request to the IPv4 server 520 through the NAT64 530 and receives a response, the NAT64 may be applied to general IP-based services including a real-time communication service. In this case, the process in which the IPv6 and IPv4 apparatuses mutually obtain and share the IP addresses for NAT64 pass may vary depending on the network settings and application protocols.

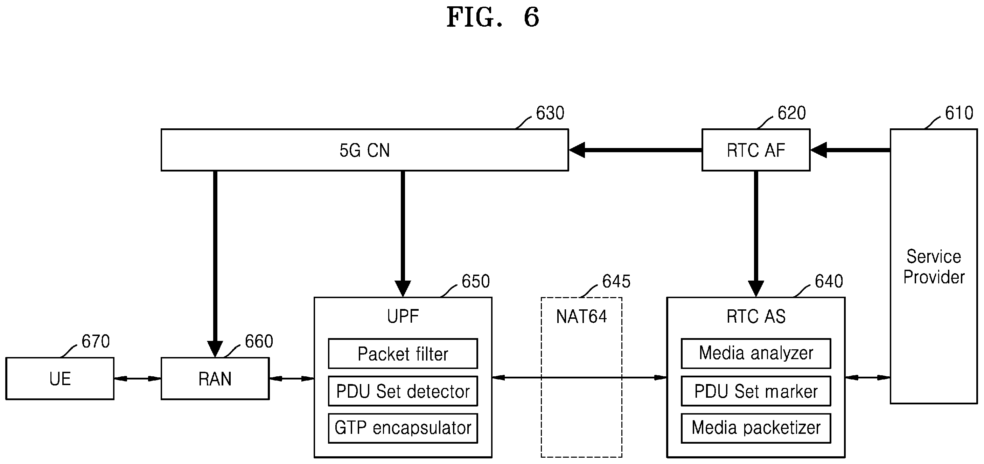

FIG. 6 is a conceptual diagram illustrating a 5G system configuration information flow for a real-time communication service in a wireless communication system according to an embodiment of the present disclosure.

Referring to FIG. 6, an RTC AF 620 may request a 5G CN 630 to establish a real-time media transport session including QoS setting parameters based on service configuration information provided by a service provider 610. The QoS setting parameters may include information about a PDU Set Marking method. When the session establishment request is successful, the RTC AF 620 may set an RTC AS 640 to function as a stream termination server and the 5G CN 630 may set a UPF 650 and an RAN 660 located on the path of the real-time communication media session. When the service is initiated, the RTC AS 640 may transmit a media packet with PDU Set Marking applied thereto to the UPF 650. The PDU Set Marking may include a media analysis process, a PDU set-related information setting process, and a packetization process. The UPF 650 that has received the media packet may use a packet filter to identify packets included in the real-time communication media session and may use the PDU Set Marking method information included in the configuration information of the 5G CN 630 to identify the PDU set and process the packet. Thereafter, the packet with a GTP header added thereto may be transmitted to the RAN 660, and when the RAN 660 provides PDU set-based packet processing, PDU set-related information may be added to the GTP header. The PDU Set Marking may include information about the size in units of bytes of the PDU set. The information about the size in units of bytes of the PDU set may be used, for example, for buffer setting of the UPF 650 or the RAN 660 for PDU set unit processing or for packet scheduling considering network congestion.

A UE 670 may be the same as or similar to the UE 101 of FIG. 1. The RAN 660 may be the same as or similar to the NG-RAN 102 of FIG. 1. The UPF 650 may be the same as or similar to the UPF 103 of FIG. 1. The RTC AS 640 may be the same as or similar to the RTC AS 122 of FIG. 1. The RTC AF 620 may be the same as or similar to the RTC AF 121 of FIG. 1.

Referring to FIG. 6, a NAT64 645 may be on a media transmission path between the UPF 650 and the RTC AS 640, and the NAT64 645 may convert the IPv4 packet transmitted by the RTC AS 640 into an IPv6 packet and transmit the same to the UPF 650. In this case, because the RTC AS 640 transmits the media by using the IPv4 packet, the size in units of bytes of the PDU set described above may be calculated based on the IPv4 packet header and transmitted as PDU Set Marking. However, because the media actually transmitted to the UE 670 via the RAN 660 through the UPF 650 is transmitted as an IPv6 packet, the size in units of bytes of the PDU set calculated based on the IPv4 packet header may be different from the size in units of bytes of the PDU set to be actually processed by the 5G system. Because the length of an IPv4 basic header is 20 bytes and the length of an IPv6 basic header is 40 bytes, for example, when the PDU set includes 100 IP packets, the size in units of bytes of the PDU set calculated based on the IPv4 packet header may be 2000 bytes smaller than the amount of data to be actually processed by the 5G system.

A media transmitter according to an embodiment of the present disclosure may calculate the size in units of bytes of the PDU set by considering the IP version of the packet input to the network that processes the PDU Set Marking to transmit the packet to a media receiver and may transmit the calculated size to the network. A combination of the IP address and the port number provided by the network to transmit the packet to the media receiver may be referred to as a host transport address of the media receiver. When a NAT is between the network of the media receiver and the media transmitter as in the embodiment of FIG. 6 described above, the NAT may provide a server-reflexive transport address or a peer-reflexive transport address mapped to the host transport address. Depending on the network configuration, there may be a case where the media transmitter fails to recognize the host transport address of the media receiver, cannot directly access the same, and may transmit media data to the media receiver only by using the server-reflexive transport address provided by the NAT. In this case, the source IP address of the IP packet received by the media receiver may be the peer-reflexive transport address of the media transmitter provided by the NAT, rather than the host transport address of the media transmitter.

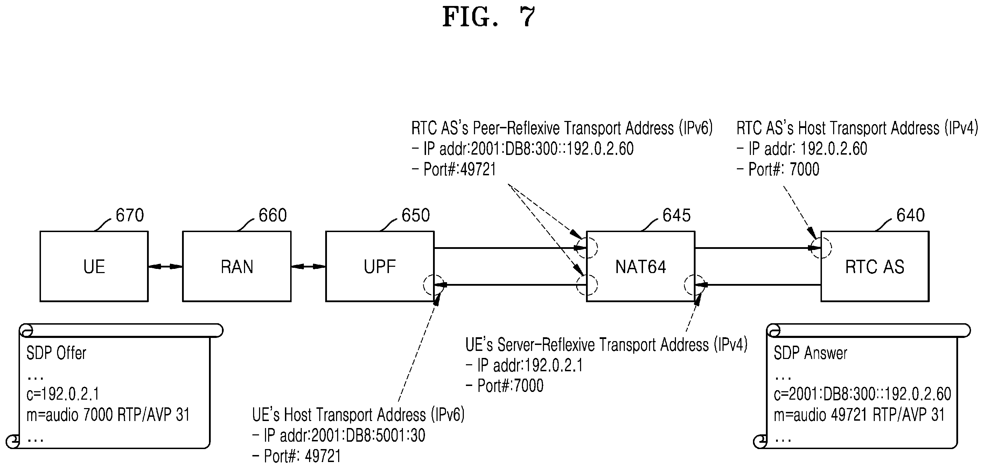

FIG. 7 is a conceptual diagram illustrating an example of a media transmission path in a wireless communication system according to an embodiment of the present disclosure. Referring to FIG. 7, the host transport addresses and the server/peer-reflexive transport address of the UE 670 and the RTC AS 640 may be, for example, as those in [Table 1] below.

[Table 1]

|  | Host transport address | Server/peer reflexive transport address |
|---|---|---|
| UE (670) | IP addr: 2001:DB8:5001:30 Port#: 47921 | IP addr: 192.0.2.1 Port#: 7000 |
| RTC AS (640) | IP addr: 192.0.2.60 Port#: 7000 | IP addr: 2001:DB8:300::192.0.2.60 Port#: 47921 |

The UE 670 and the RTC AS 640 may seek and exchange the transport addresses including the host transport address and the server-reflexive transport address with each other before media session establishment, may finally determine a combination of mutually accessible transport addresses, and may use the same to establish a media session. For example, the interactive connectivity establishment (ICE) method defined in the IETF RFC 8445 may be used to perform a transport address combination determination procedure for establishing the media session. Referring to FIG. 7, the RTC AS 640 may transmit media data to the UE 670 by using the server-reflexive transport address of the UE 670 as the destination IP address, and the UE 670 may transmit media data to the RTC AS 640 by using the peer-reflexive transport address of the RTC AS 640 as the destination IP address.

Particular media-related information negotiation for media session establishment may be performed by using an SDP, and information for determining the transport address combination may also be transmitted by using the SDP.

In this case, the connection information (c = line) of an SDP Offer transmitted by the UE 670 to the RTC AS 640 may include only the server-reflexive transport address of the UE 670, and in this case, the RTC AS 640 may not recognize the IP version of the host transport address of the UE 670, that is, the IP version of the media data to be input to the UPF.

The following embodiments may provide a method by which the media transmitter determines the IP version of the host transport address of the media receiver and calculates the size in units of bytes of the PDU set considering the same.

[Embodiment 1 - SDP Signaling]

In the communication system according to an embodiment of the present disclosure, the RTP receiver may signal the IP version of the host transport address to the RTP transmitter through the SDP. For example, when the IP versions of the host transport addresses for receiving all media streams described in the SDP are equal, the SDP may include the following session-level attributes.

```
att-field = "3gppHostlpVersion"
att-value = IpVersion
IpVersion = "IPv4" / "IPv6" / token
```

For example, the 3gppHostIpVersion attribute having a value of IPv4 may indicate that the RTP receiver transmitting the SDP including the 3gppHostIpVersion attribute has an IPv4 host transport address, and the 3gppHostIp-Version attribute having a value of IPv6 may indicate that the RTP receiver transmitting the SDP including the 3gppHostIpVersion attribute has an IPv6 host transport address.

As another example, when the RTP receiver uses a host transport address for two or more IP versions through the SDP, the 3gppHostIPVersion attribute may be provided as a subattribute of a media description (m= line) that describes a media stream. In this case, the 3gppHostIpVersion attribute having a value of IPv4 may indicate that the media stream described by the media description including the 3gppHostIpVersion attribute is received by the RTP receiver through an IPv4 host transport address, and the 3gppHostIpVersion attribute having a value of IPv6 may indicate that the media stream described by the media description including the 3gppHostIpVersion attribute is received by the RTP receiver through an IPv6 host transport address.

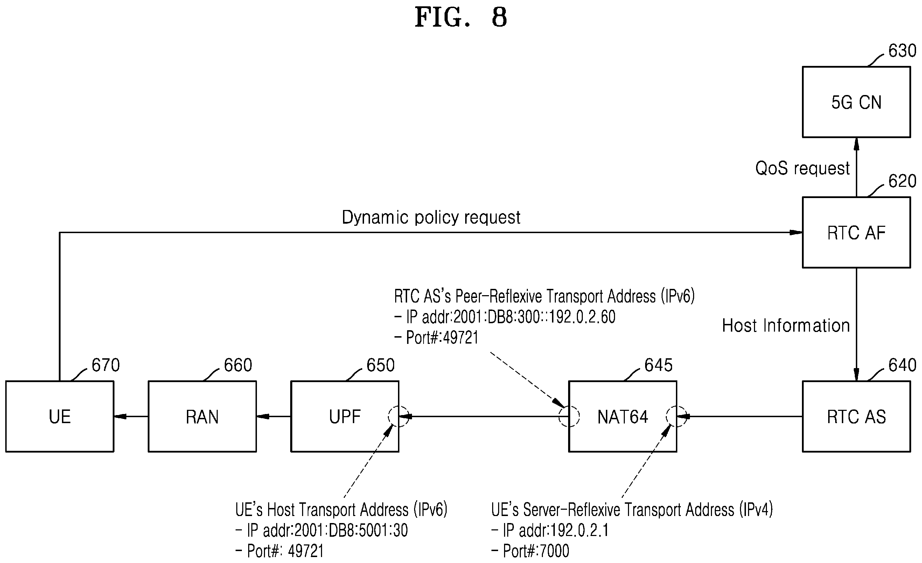

[Embodiment 2 - AF Signaling (see FIG. 8)]

In the communication system according to an embodiment of the present disclosure, the RTC AF may collect host transport address-related information for each media stream from the RTP receiver and transmit the same to the RTP transmitter. In this case, the information transmitted by the RTC AF to the RTP transmitter may be all or some of the information collected from the RTP receiver, and the format of the information may also vary. The RTP transmitter may calculate the size in units of bytes of the PDU set by using the host transport address-related information for each media stream transmitted by the RTC AF.

FIG. 8 is a conceptual diagram illustrating an example of a PDU Set Marking information signaling path in a wireless communication system according to an embodiment of the present disclosure. Referring to FIG. 8, the RTC AS 640 may transmit media data as an IPv4 packet with the destination address being the server-reflexive transport address (IP address = 192.0.2.1, port number = 7000) of the UE 670. The IPv4 packet may be converted into an IPv6 packet in the NAT64 645 and transmitted to the UE 670 via the UPF 650 and RAN 660. In this case, the source IP address and the port number of the IPv6 packet may be respectively set to 2001:DB8:300::192.0.2.60 and 49721, and the destination IP address and the port number may be respectively set to 2001:DB8:5001:30 and 49721. A service data flow may refer to a packet flow in which the source IP address, the destination IP address, the source port number, the destination port number, and the protocol (e.g., UDP) are equal, and in the embodiment illustrated in FIG. 8, media data transmitted as an IPv6 packet input to the UPF 650 may be said to correspond to one service data flow.

Before or during the establishment of a media data transport session, the UE 670 may request a dynamic policy to be applied to a service data flow from the RTC AF 620, and the RTC AF 620 may provide parameters for QoS settings to the 5G CN 630 based on the dynamic policy request. In the communication system according to an embodiment of the present disclosure, the dynamic policy and QoS setting parameters may include PDU Set Marking-related information. Also, the PDU Set Marking-related information may include information about a method of calculating the size in units of bytes of the PDU set.

For example, the dynamic policy request may include at least one of pieces of information of [Table 2] below.

[Table 2]

| Property name | Data type | Description |
|---|---|---|
| dynamicPolicyId | ResourceId | Dynamic Policy identifier |
| policyTemplateId | ResourceId | Associated Policy Template identifier |
| provisioningSessionId | ResourceId | Associated Provisioning Session identifier |
| qosSpecification | RTCQoSSpecification | QoS-related attributes |
| serviceDataFlowDescription | ServiceDataFlowDescription | Service data flow identification information for requesting QoS dynamic policy (Source/destination IP address, source/destination port number, protocol) |
| mediaIdentifier | String | Identifier of associated media stream |
| marBwDlBitRate | BitRate | Maximum requested bit rate for Downlink |
| marBwUlBitRate | BitRate | Maximum requested bit rate for Uplink |
| minDesBwDlBitRate | BitRate | Minimum desired bit rate for Downlink |
| minDesBwUlBitRate | BitRate | Minimum desired bit rate for Uplink |
| mirBwDlBitRate | BitRate | Minimum requested bit rate for Downlink |
| mirBwUlBitRate | BitRate | Minimum requested bit rate for Uplink |
| desLatency | Integer | Desired delay time |
| desLoss | Integer | Desired loss rate |
| pduSetMarking | PDUSetMarking | PDU Set Marking-related information |

For example, the PDUSetMarking object in [Table 2] may include at least one of pieces of information of [Table 3] below.

[Table 3]

| Property name | Data type | Description |
|---|---|---|
| serviceDataFlowDescription | ServiceDataFlowDescription | Service data flow identification information to which PDU Set Marking is applied (source/destination IP address, source/destination port number, protocol) |
| sdpMid | string | Identifier(s) of SDP media description (m = line) corresponding to media data transmitted through corresponding service data flow |
| headerExtensionUri | string | Global identifier of RTP extension header for PDU Set Marking (URI) |
| localIdentifier | Integer | Local identifier of RTP extension header for PDU Set Marking (ID field value of RTP extension header) |
| format | Boolean | RTP extension header format (short or long) |
| pduSetSizeActive | Boolean | Existence/nonexistence of PSSize field of RTP extension header |

(continued)

| Property name | Data type | Description |
|---|---|---|
| *pduSetSizeMethod* | Boolean | PDU Set Size calculation method It may have the same usage as PSSM parameter of RTP extension header described above. |
| *pduSetSizeIpVersion* | Boolean | IP version considered in PDU Set Size calculation It may have the same usage as IPV parameter of RTP extension header described above. |
| *pduSetSizeIpOptions* | Boolean | IP optional header considered in PDU Set Size calculation It may have the same usage as IPO parameter of RTP extension header described above. |

As described above, the RTC AF 620 may provide parameters for QoS settings to the 5G CN 630 based on the dynamic policy received from the UE 670. The QoS setting parameters may include the PDUSetMarking object of [Table 3].

The 5G CN 630 that has received the QoS setting parameters may determine a packet processing policy of the 5G network based on the QoS setting parameters and notify the result thereof to the RTC AF 620. A packet processing policy of the 5G network may be transmitted to the UPF 650 that processes a user packet. The packet processing policy may include PDU Set Marking-related information, and the PDU Set Marking information may be used by the UPF to identify an RTP extension header in a received packet and interpret each parameter included in the identified RTP extension header. The UPF 650 may process an associated packet by using the interpreted PDU Set Marking-related information, generate information for subsequent packet processing in the RAN 660, and transmit the information to the RAN 660.

Referring to FIG. 8, the RTC AF 620 may transmit host transport address-related information of the UE 670 to the RTC AS 640. The RTC AS 640 that has received the host transport address-related information may calculate the size in units of bytes of the PDU set based on this information. The host transport address-related information may include, for example, information of [Table 4] below.

[Table 4]

| Property name | Data type | Description |
|---|---|---|
| *serviceDataFlowDescription* | ServiceDataFlowDescription | Service data flow identification information to which PDU Set Marking is applied (source/destination IP address, source/destination port number, protocol) |
| *sdpMid* | string | Identifier(s) of SDP media description (m = line) corresponding to media data transmitted through corresponding service data flow |

As another example, the host transport address-related information may include information of [Table 5] below.

[Table 5]

| Property name | Data type | Description |
|---|---|---|
| *sdfIpVersion* | string | Destination IP address version of service data flow to which PDU Set Marking is applied Value thereof may be, for example, IPv4 or IPv6. |
| *sdpMid* | string | Identifier(s) of SDP media description (m = line) corresponding to media data transmitted through corresponding service data flow Nonexistence of this property may mean that all service data flows included in session described by SDP may have the same sdfIpVersion value. |

According to an embodiment of the present disclosure, the RTC AS 640 may use IP optional field-related information used by the NAT64 645 to calculate the size in units of bytes of the PDU set considering the entire packet length. Depending on the network configuration and the operator policy, the IP optional field-related information may be provided in an RTC AS 640 configuration process for service provision or may be obtained through an API provided by a network entity such as the NAT64 645 or the UPF 650.

According to an embodiment of the present disclosure, the RTC AS 640 may use IP optional field-related information used in the IP packet received by the UE 670 to calculate the size in units of bytes of the PDU set considering the entire packet length.

According to an embodiment of the present disclosure, the UE 670 may provide the IP optional field-related information used in the received IP packet to the RTC AS 640. The IP optional field-related information may include one or more IP optional field identifiers and may be transmitted to the RTC AS 640 through an RTP extension header or an RTCP message.

According to an embodiment of the present disclosure, the UPF 650 may provide the IP optional field-related information used in the received IP packet to the RTC AS 640. The IP optional field-related information may include one or more IP optional field identifiers and may be provided as a response to an information provision request from the RTC AS 640 or as a notification according to the subscription of the RTC AS 640, depending on the service provided by the UPF 650.

In the above embodiment, the UE 670 transmits dynamic policy information to the RTC AF 620; however, depending on the network and service configuration, a network entity such as the RTC AS 640 associated with a real-time communication service may transmit dynamic policy information to the RTC AF 620.

The methods according to embodiments of the present disclosure described in the specification or the claims may be implemented in the form of hardware, software, or a combination of hardware and software.

When the methods are implemented as software, a computer-readable storage medium or a computer program product may be provided to store one or more programs (software modules). The one or more programs stored in the computer-readable storage medium or the computer program product may be configured for execution by one or more processors in an electronic device. The one or more programs may include instructions for causing the electronic device to execute the methods according to embodiments of the present disclosure described in the specification or the claims.

The programs (software modules or software) may be stored in a random access memory, a nonvolatile memory including a flash memory, a read-only memory (ROM), an electrically erasable programmable read-only memory (EEPROM), a magnetic disc storage device, a compact disc-ROM (CD-ROM), a digital versatile disc (DVD) or other forms of optical storage devices, or a magnetic cassette. Alternatively, the programs may be stored in a memory including any combination of some or all thereof. Also, each of the memories may be provided in plurality.

Also, the programs may be stored in an attachable storage device that may be accessed through a communication network such as Internet, Intranet, local area network (LAN), wide LAN (WLAN), or storage area network (SAN), or through a communication network including any combination thereof. The storage device may be connected through an external port to a device implementing an embodiment of the present disclosure. Also, a separate storage device on a communication network may be connected to a device performing an embodiment of the present disclosure.

In particular embodiments of the present disclosure described above, the components included in the present disclosure are expressed as singular or plural depending on particular embodiments presented herein. However, the singular or plural expression is selected suitably for the presented situation for convenience of description, and the present disclosure is not limited to singular or plural components; for example, components expressed as plural may include singular components, or components expressed as singular may include plural components.

Moreover, embodiments of the present disclosure described in the present specification and drawings are merely particular examples to easily describe the technical content of the present disclosure and help to understand the present disclosure, and are not intended to limit the scope of the present disclosure. That is, it will be understood by those of ordinary skill in the art that various changes in form and details may be made in the embodiments without departing from the spirit and scope of the present disclosure. Also, the above embodiments may be operated in combination when necessary. For example, portions of an embodiment and another embodiment of the present disclosure may be combined with each other to operate the base station and the UE. Also, embodiments of the present disclosure may be applied to other communication systems, and other modifications based on the concept of the embodiments may also be implemented. For example, the embodiments may also be applied to LTE systems, 5G or NR systems, and the like.

According to the present disclosure, a method performed by a real-time communication application server (RTC AS) in a wireless communication system is provided. The method may include receiving a request for media session establishment from a UE. The method may include performing the media session establishment based on a PDU set-based QoS-related policy and PDU set-related information. The method may include transmitting a media packet based on the PDU set-related information. The PDU set-related information may include a size of a PDU set.

In an embodiment, the size of the PDU set may include a length of a packet header, and the packet header may include an IP header.

In an embodiment, the method may include receiving an SDP offer for media-related information negotiation from the UE. The method may include determining the size of the PDU set based on the SDP offer.

In an embodiment, the SDP offer may include an IP version of a transport address of the UE.

In an embodiment, the method may include receiving transport address-related information based on a dynamic policy request of the UE for setting the PDU set-related information. The method may include determining the size of the PDU set based on the transport address-related information.

In an embodiment, the transport address-related information may include a transport address of the UE and a transport address of the RTC AS. The method may include identifying, based on the transport address of the UE and the transport address of the RTC AS, whether an IP version of the transport address of the UE and an IP version of the transport address of the RTC AS are equal to each other.

In an embodiment, size information of the PDU set may be in units of bytes.

According to the present disclosure, a method performed by a UE in a wireless communication system is provided. The method may include transmitting a request for media session establishment to an RTC AS. The method may include receiving a media packet based on a PDU set-based QoS-related policy for the media session establishment and PDU set-related information. The PDU set-related information may include a size of the PDU set.

According to the present disclosure, an RTC AS performing communication in a wireless communication system may be provided, and the RTC AS may include a transceiver and at least one processor connected to the transceiver. The at least one processor may be configured to receive a request for media session establishment from a UE. The at least one processor may be configured to perform the media session establishment based on a PDU set-based QoS-related policy and PDU set-related information. The at least one processor may be configured to transmit a media packet based on the PDU set-related information. The PDU set-related information may include a size of the PDU set.

**Claims**

1. A method performed by a real-time communication application server (RTC AS) in a wireless communication system, the method comprising:

   receiving a request for media session establishment from a user equipment (UE);
   performing the media session establishment based on a protocol data unit (PDU) set-based Quality of Service (QoS)-related policy and PDU set-related information; and
   transmitting a media packet based on the PDU set-related information,
   wherein the PDU set-related information comprises a size of a PDU set.

2. The method of claim 1, wherein the size of the PDU set comprises a length of a packet header, and the packet header comprises an Internet protocol (IP) header.

3. The method of claim 1, further comprising:

   receiving a session description protocol (SDP) offer for media-related information negotiation from the UE; and
   determining the size of the PDU set based on the SDP offer.

4. The method of claim 3, wherein the SDP offer comprises an IP version of a transport address of the UE.

5. The method of claim 1, further comprising:

   receiving transport address-related information based on a dynamic policy request of the UE for setting the PDU set-related information; and
   determining the size of the PDU set based on the transport address-related information.

6. The method of claim 5, wherein the transport address-related information comprises

   a transport address of the UE and a transport address of the RTC AS, and
   the method further comprises identifying, based on the transport address of the UE and the transport address of the RTC AS, whether an IP version of the transport address of the UE and an IP version of the transport address of the RTC AS are equal to each other.

7. The method of claim 1, wherein size information of the PDU set is in units of bytes.

8. A method performed by a user equipment (UE) in a wireless communication system, the method comprising:

transmitting a request for media session establishment to a real-time communication application server (RTC AS); and

receiving a media packet based on a protocol data unit (PDU) set-based Quality of Service (QoS)-related policy for the media session establishment and PDU set-related information,

wherein the PDU set-related information comprises a size of a PDU set.

9. The method of claim 8, wherein the size of the PDU set comprises a length of a packet header, and the packet header comprises an Internet protocol (IP) header.

10. The method of claim 8, further comprising transmitting a session description protocol (SDP) offer for media-related information negotiation to the RTC AS,

wherein the size of the PDU set is determined based on the SDP offer.

11. The method of claim 10, wherein the SDP offer comprises an IP version of a transport address of the UE.

12. The method of claim 8, further comprising transmitting a dynamic policy request for setting the PDU set-related information,

wherein the size of the PDU set is determined based on transport address-related information obtained in response to the dynamic policy request.

13. The method of claim 12, wherein the transport address-related information comprises a transport address of the UE and a transport address of the RTC AS.

14. The method of claim 8, wherein size information of the PDU set is in units of bytes.

15. A real-time communication application server (RTC AS) performing communication in a wireless communication system, the RTC AS comprising:

a transceiver; and

at least one processor coupled to the transceiver, wherein the at least one processor is configured to:

receive a request for media session establishment from a user equipment (UE);

perform the media session establishment based on a protocol data unit (PDU) set-based Quality of Service (QoS)-related policy and PDU set-related information; and

transmit a media packet based on the PDU set-related information,

wherein the PDU set-related information comprises a size of a PDU set.

# FIG. 1

EP 4 770 049 A1

FIG. 2

## FIG. 3

| IP Header | UDP Header | RTP Header | RTP Payload (PDU) |
|-----------|-----------|------------|-------------------|

340 · 330 · 320 · 310

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|V=2|P|X|  CC   |M|     PT      |       sequence number         |
+-+-+-+-+-+-+-+-+-+-+-+-+-+-+-+-+-+-+-+-+-+-+-+-+-+-+-+-+-+-+-+-+
|                           timestamp                           |
+-+-+-+-+-+-+-+-+-+-+-+-+-+-+-+-+-+-+-+-+-+-+-+-+-+-+-+-+-+-+-+-+
|           synchronization source (SSRC) identifier            |
+=+=+=+=+=+=+=+=+=+=+=+=+=+=+=+=+=+=+=+=+=+=+=+=+=+=+=+=+=+=+=+=+
|            contributing source (CSRC) identifiers             |
|                             . . . .                           |
+-+-+-+-+-+-+-+-+-+-+-+-+-+-+-+-+-+-+-+-+-+-+-+-+-+-+-+-+-+-+-+-+
|          defined by profile         |           length        |
+-+-+-+-+-+-+-+-+-+-+-+-+-+-+-+-+-+-+-+-+-+-+-+-+-+-+-+-+-+-+-+-+
|                        header extension                       |
|                             . . . .                           |
```

# FIG. 4

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|  ID   |  len  |E| EDB |  PSI  |      PSSN      |    PSN        |
+-+-+-+-+-+-+-+-+-+-+-+-+-+-+-+-+-+-+-+-+-+-+-+-+-+-+-+-+-+-+-+-+
|                    PSSize                      |
+.+.+.+.+.+.+.+.+.+.+.+.+.+.+.+.+.+.+.+.+.+.+.+.+
```

# FIG. 5

NAT64 Translation — 530

**IPv6**

| ScrIP | 2001:DB8:5001:30 |
|---|---|
| DestIP | 2001:DB8:300::192.0.2.60 |

**IPv4**

| ScrIP | 192.0.2.100 |
|---|---|
| DestIP | 192.0.2.60 |

510 — IPv6 Client
2001:DB8:5001:30

520 — IPv4 Server
192.0.2.60

**IPv6**

| ScrIP | 2001:DB8:300::192.0.2.60 |
|---|---|
| DestIP | 2001:DB8:5001:30 |

**IPv4**

| ScrIP | 192.0.2.60 |
|---|---|
| DestIP | 192.0.2.100 |

# FIG. 6

EP 4 770 049 A1

## FIG. 7

RTC AS's Peer-Reflexive Transport Address (IPv6)
– IP addr:2001:DB8:300::192.0.2.60
– Port#:49721

RTC AS's Host Transport Address (IPv4)
– IP addr: 192.0.2.60
– Port#: 7000

```
  ┌──────┐        ┌──────┐        ┌──────┐        ┌──────┐        ┌──────┐
  │  670 │        │  660 │        │  650 │        │  645 │        │  640 │
  │  UE  │◄──────►│ RAN  │◄──────►│ UPF  │───────►│NAT64 │───────►│RTC AS│
  │      │        │      │        │      │◄───────│      │◄───────│      │
  └──────┘        └──────┘        └──────┘        └──────┘        └──────┘
```

UE's Server-Reflexive Transport Address (IPv4)
– IP addr:192.0.2.1
– Port#:7000

SDP Offer
...
c=192.0.2.1
m=audio 7000 RTP/AVP 31
...

UE's Host Transport Address (IPv6)
– IP addr:2001:DB8:5001:30
– Port#: 49721

SDP Answer
...
c=2001:DB8:300::192.0.2.60
m=audio 49721 RTP/AVP 31
...

EP 4 770 049 A1

# FIG. 8

5G CN — 630

QoS request

Dynamic policy request

RTC AF — 620

Host Information

RTC AS's Peer-Reflexive Transport Address (IPv6)
- IP addr:2001:DB8:300::192.0.2.60
- Port#:49721

UE — 670

RAN — 660

UPF — 650

NAT64 — 645

RTC AS — 640

UE's Host Transport Address (IPv6)
- IP addr:2001:DB8:5001:30
- Port#: 49721

UE's Server-Reflexive Transport Address (IPv4)
- IP addr:192.0.2.1
- Port#:7000

EP 4 770 049 A1

## INTERNATIONAL SEARCH REPORT

| | International application No. |
|---|---|
| | **PCT/KR2024/015923** |

| **A.** | **CLASSIFICATION OF SUBJECT MATTER** |
|---|---|
| | **H04L 65/80**(2022.01)i; **H04L 65/1069**(2022.01)i; **H04L 47/36**(2022.01)i |

According to International Patent Classification (IPC) or to both national classification and IPC

| **B.** | **FIELDS SEARCHED** |
|---|---|

Minimum documentation searched (classification system followed by classification symbols)

H04L 65/80(2022.01); H04L 47/24(2022.01); H04L 47/2416(2022.01); H04W 28/18(2009.01); H04W 72/54(2023.01); H04W 72/543(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실시간 통신 애플리케이션 서버(real-time communication application server, RTC AS), 미디어 세션(media session), PDU 세트(Set), 사이즈(size), IP(internet protocol) 주소(address)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X<br>Y | 3GPP; TSG SA; Study on XR (Extended Reality) and media services (Release 18). 3GPP TR 23.700-60 V18.0.0. 21 December 2022.<br> See pages 104, 107-108, 110-111, 123 and 257. | 1,7-8,14-15<br>2-6,9-13 |
| Y | 3GPP; TSG SA; 5G Real-time Media Transport Protocol Configurations (Release 18). 3GPP TS 26.522 V0.1.1. 23 September 2023.<br> See pages 9 and 14. | 2-6,9-13 |
| Y | WO 2020-093377 A1 (HUAWEI TECHNOLOGIES CO., LTD.) 14 May 2020 (2020-05-14)<br> See page 7, line 37 - page 8, line 6; and claim 1. | 6,13 |
| A | CN 116868669 A (BEIJING XIAOMI MOBILE SOFTWARE CO., LTD.) 10 October 2023 (2023-10-10)<br> See paragraphs [0099], [0146]-[0147], [0207]-[0208] and [0215]; and claim 1. | 1-15 |
| A | WO 2023-096723 A1 (APPLE INC.) 01 June 2023 (2023-06-01)<br> See claims 1-15. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 January 2025** | **20 January 2025** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
#### Information on patent family members

| International application No. |
|---|
| **PCT/KR2024/015923** |

| Patent document cited in search report | | | Publication date (day/month/year) | Patent family member(s) | | | Publication date (day/month/year) |
|---|---|---|---|---|---|---|---|
| WO | 2020-093377 | A1 | 14 May 2020 | CN | 112534866 | A | 19 March 2021 |
| CN | 116868669 | A | 10 October 2023 | WO | 2024-229864 | A1 | 14 November 2024 |
| WO | 2023-096723 | A1 | 01 June 2023 | CN | 118339815 | A | 12 July 2024 |
| | | | | EP | 4437704 | A1 | 02 October 2024 |
| | | | | KR | 10-2024-0090976 | A | 21 June 2024 |
| | | | | US | 2023-0164081 | A1 | 25 May 2023 |

Form PCT/ISA/210 (patent family annex) (July 2022)